# EUROPÄISCHE PATENTSCHRIFT

(11) **EP 2 892 129 B1**
(45) Veröffentlichungstag und Bekanntmachung des Hinweises auf die Patenterteilung: **12.12.2018**
(21) Anmeldenummer: 14188613.5
(22) Anmeldetag: 13.10.2014
(51) Int. Cl.: H02K 11/33, H02K 5/22

(54) **Elektrisches Gerät mit einem im Gehäusedeckel integrierten elektrischen Anschluss**
Electrical device with an electrical connection integrated into the cover of the housing
Appareil électrique doté d'un raccordement électrique intégré dans le couvercle de boîtier

(30) Priorität: 11.11.2013 DE 102013222822
(43) Veröffentlichungstag der Anmeldung: 08.07.2015
(73) Patentinhaber: ROBERT BOSCH GMBH, 70442 Stuttgart (DE)
(72) Erfinder: Lubina, Zeljko, 72762 Reutlingen (DE); Gesellmann, Matthias, 72770 Reutlingen (DE)

(56) Entgegenhaltungen:
- DE-A1-102011 112 820
- DE-T2- 60 018 193
- FR-A1- 2 618 272
- US-A1- 2001 054 853
- US-A1- 2010 133 935

## Beschreibung

### Stand der Technik

Die Erfindung betrifft ein elektrisches Gerät, insbesondere eine elektrische Maschine. Das Gerät weist ein Gehäuse auf. Das Gerät weist auch einen mit dem Gehäuse insbesondere trennbar verbundenen Gehäusedeckel auf. In dem Gehäuse ist wenigstens eine elektrische Komponente des Geräts aufgenommen. Bevorzugt umschließt das Gehäuse dazu wenigstens einen Hohlraum, in dem die wenigstens eine elektrische Komponente des Geräts angeordnet ist. Das Gehäuse weist eine Gehäuseöffnung auf. Der Gehäusedeckel ist ausgebildet, die Gehäuseöffnung des Gehäuses zu verschließen.

Bei elektrischen Maschinen, welche insbesondere als Bestandteil eines Antriebs eines Elektrofahrzeugs vor eindringender Verschmutzung und Feuchtigkeit geschützt sind, wird das Gehäuse, welches wenigstens eine oder mehrere elektronische Komponenten der elektrischen Maschine umschließt, durch den Gehäusedeckel verschlossen, wobei der Gehäusedeckel einen Durchbruch aufweist, durch den ein mit dem Gehäuse verbundener Anschlussbolzen eines elektrischen Anschlusses nach außen durch den Durchbruch hindurchragen kann, nachdem das Gehäuse mit dem Gehäusedeckel verschlossen worden ist.

Aus der US 2001/054 853 A1 ist ein Generator bekannt, bei dem in einem Gehäusedeckel ein elektrischer Anschluss ausgebildet ist, welcher an einer Gehäuseabdeckung angeordnet ist.

Aus der DE 10 2011 112 820 ist ein Elektromotor mit einer Adapterplatte, bekannt, wobei die Adapterplatte Primärkontakte des Stators mit Sekundärkontakten verbindet.

Aus der FR 2 618 272 ist eine Abdeckhaube für das äußere Ende einer elektrischen Maschine bekannt, die elektrische Anschlüsse sowohl an der axialen wie auch an der radialen Seite besitzt.

Aus der US 2001/0054853 A1 ist eine elektrische Maschine für ein Fahrzeug bekannt, bei der ein mit dem Gehäuse verbundener elektrischer Anschlussbolzen durch einen Durchbruch in einem Gehäusedeckel der elektrischen Maschine hindurchragt.

### Offenbarung der Erfindung

Erfindungsgemäß weist der Gehäusedeckel gemäß des Anspruchs 1 des Geräts der eingangs genannten Art einen nach außen weisenden elektrischen Anschluss zur Stromversorgung und/oder Stromabgabe des Geräts auf, welcher mit dem Gehäusedeckel verbunden ist und wobei der elektrische Anschluss ausgebildet ist, mit einem mit dem Gehäuse verbundenen Gegenanschluss insbesondere trennbar verbunden zu werden.

Dadurch kann der Gehäusedeckel vorteilhaft mit nur einer umlaufenden Dichtung mit dem Gehäuse verbunden werden. Weiter vorteilhaft ist so keine zusätzliche Dichtung zum Abdichten eines Durchbruchs in dem Gehäusedeckel gegen den Anschlussbolzen notwendig. Weiter vorteilhaft kann so der Anschlussbolzen an zueinander verschiedenen Orten des Gehäusedeckels mit dem Gehäusedeckel verbunden sein, wodurch vorteilhaft für zueinander verschiedene Anforderungen an eine Positionierung des Anschlussbolzens nur der Anschlussbolzen mit seiner elektrischen Verbindung zu dem Gegenanschluss hin, sowie der Gehäusedeckel, insbesondere eine Formgebung des Gehäusedeckels geändert werden muss. Vorteilhaft braucht so das Gehäuse mit dem Gegenanschluss für zueinander verschiedene Positionierungen des Anschlussbolzens nicht geändert zu werden, sodass auch bei Geräten, insbesondere elektrischen Maschinen, welche im Inneren des Gehäuses neben dem Stator und dem Rotor weitere elektrische Komponenten, beispielsweise einen Inverter, einen Zwischenkreiskondensator und eine Steuereinheit, beispielsweise einen Pulsweitenmodulator, aufweisen, eine Positionierung beziehungsweise eine räumliche Auslegung der im Inneren des Gehäuses aufgenommenen Komponenten so nicht geändert werden muss. Weiter vorteilhaft kann so der im Inneren des Gehäuses zur Verfügung stehende Bauraum für andere Komponenten, insbesondere Elektronikkomponenten genutzt werden.

Die elektrische Maschine weist auch einen Stator und einen Rotor auf, und ist ausgebildet, als Generator und/oder Elektromotor betrieben zu werden. Vorteilhaft ist die elektrische Maschine ein Elektroantrieb für ein Kraftfahrzeug, insbesondere ein Elektrofahrzeug oder Hybridfahrzeug.

Weitere vorteilhafte Ausführungsformen für elektrische Geräte sind beispielsweise Inverter, insbesondere für Photovoltaikanlagen oder Inverter für Elektromotoren, beispielsweise eine Servolenkung für ein Kraftfahrzeug, welche eine elektrische Maschine als Elektromotor aufweist. Im Folgenden wird die Erfindung am Beispiel der elektrischen Maschine als Gerät weiter beschrieben, die folgenden Varianten können auch an dem zuvor beschriebenen Geräten verwirklicht sein.

Bevorzugt umschließt das Gehäuse wenigstens eine elektronische Komponente der elektrischen Maschine, insbesondere einen Inverter oder zusätzlich eine mit dem Inverter verbundene elektronische Steuereinheit zur Erzeugung von Steuerpulsen, insbesondere zur elektronischen Kommutierung der elektrischen Maschine, insbesondere des Stators und/oder des Rotors.

Weiter bevorzugt schließt das Gehäuse einen Kühlkörper mit ein, welcher an den Inverter wärmeleitend angekoppelt ist.

Beispielsweise ist ein Stator und/oder ein Rotor der elektrischen Maschine in dem Gehäuse aufgenommen.

Bevorzugt ist die elektrische Maschine von dem Inverter und der Steuereinheit durch eine Trennwand getrennt. Bevorzugt ist der Gehäuseteil in dem der Stator und der Rotor aufgenommen ist belüftet und weist dazu Belüftungsöffnungen auf. Bevorzugt ist die elektrische Maschine ausgebildet, - beispielsweise mittels eines mit dem Rotor verbundenen Ventilators - einen Kühlluftstrom zu erzeugen und diesen an dem zuvor erwähnten Kühlkörper vorbeizuführen und so Wärme von dem Kühlkörper des Inverters abzuführen. Der Gehäuseteil des Gehäuses, welcher mittels des Gehäusedeckels verschlossen werden kann, ist bevorzugt feuchtigkeitsdicht ausgebildet.

In einer bevorzugten Ausführungsform ist der elektrische Anschluss ausgebildet, mit dem Gegenanschluss schraubverbunden oder steckverbunden zu werden. Der Gegenanschluss ist in dieser Ausführungsform ausgebildet, mit dem elektrischen Anschluss schraubverbunden beziehungsweise steckverbunden zu werden.

In einer anderen Ausführungsform als der schraubverbundenen oder steckverbundenen Variante ist der elektrische Anschluss ausgebildet, mit dem Gegenanschluss schweißverbunden zu werden. Der Gehäusedeckel kann in dieser Ausführungsvariante durch Trennen der Schweißverbindung von dem Gehäuse gelöst werden.

In einer bevorzugten Ausführungsform ist der Gehäusedeckel ein Kunststoffdeckel. Der elektrische Anschluss ist in dieser Ausführungsform mit wenigstens einem Teil in den Gehäusedeckel eingebettet, insbesondere eingemoldet, wobei ein zum Verbinden mit dem Gegenanschluss ausgebildeter Teil des Anschlusses aus dem Gehäusedeckel herausragt. So kann die Gehäuseöffnung des Gehäuses vorteilhaft mit dem Gehäusedeckel verschlossen werden. Anschließend kann der aus dem Gehäusedeckel herausweisende Teil des elektrischen Anschlusses mit dem Gegenanschluss verbunden, insbesondere schraubverbunden, steckverbunden oder schweißverbunden werden. Der Gegenanschluss ist bevorzugt im Bereich des elektrischen Anschlusses, insbesondere des Teils des elektrischen Anschlusses, angeordnet, welcher zum Verbinden mit dem Gegenanschluss ausgebildet ist.

So können vorteilhaft zueinander verschiedene Varianten von Gehäusedeckeln, welche sich in einer Positionierung des elektrischen Anschlusses in dem Gehäusedeckel unterscheiden, mit dem gleichen Gehäuse durch Verschließen der Gehäuseöffnung in dem Gehäuse verbunden werden.

In einer bevorzugten Ausführungsform weist der Anschluss einen nach außen weisenden Anschlussbolzen auf und der in dem Gehäusedeckel eingebettete Teil des elektrischen Anschlusses wenigstens eine Haltefahne auf. Die Haltefahne erstreckt sich in einer flachen Erstreckung des Gehäusedeckels radial abweisend. Bevorzugt verläuft eine Längsachse des Anschlussbolzens quer zur radialen Erstreckung der Haltefahne. Der Anschlussbolzen ist so vorteilhaft Bestandteil des Gehäusedeckels. Der Anschlussbolzen bildet den zuvor erwähnten Kontakt.

In einer bevorzugten Ausführungsform weist der Gehäusedeckel eine aus dem Gehäusedeckel herausragende Haltevorrichtung auf, und welche ausgebildet ist, mit dem Gehäuse schraubverbunden oder steckverbunden zu werden. Die Haltevorrichtung ist bevorzugt mit einem Abschnitt in den Gehäusedeckel eingebettet und ist ausgebildet, ein auf den Gehäusedeckel von dem Anschlussbolzen übertragenes Moment, insbesondere beim Verschrauben des Anschlussbolzens auf den Gehäusedeckel übertragenes Drehmoment aufzunehmen und abzuleiten.

Die sich in der flachen Erstreckung des Gehäusedeckels in dem Gehäusedeckel eingebettete, insbesondere eingemoldete Haltevorrichtung kann vorteilhaft das von dem Anschlussbolzen auf den Gehäusedeckel einwirkende Moment in dem Gehäusedeckel verteilen. Die Haltevorrichtung, welche aus dem Gehäusedeckel herausragt und mit dem Gehäuse verbunden werden kann, ist bevorzugt ausgebildet, das von dem Anschlussbolzen übertragene Moment auf das Gehäuse zu leiten und so abzufangen. Weiter bevorzugt ist die Haltevorrichtung von dem elektrischen Anschluss elektrisch isoliert.

In einer bevorzugten Ausführungsform der elektrischen Maschine ist der eingebettete Teil des Anschlusses mit der Haltefahne aus einem Blech gebildet und der Anschlussbolzen ist mit dem Blech elektrisch verbunden. Bevorzugt ist der Anschlussbolzen mit dem Blech schraubverbunden, steckverbunden und/oder pressverbunden. In einer anderen Ausführungsform ist der Anschlussbolzen mit dem Blech lötverbunden oder schweißverbunden. So kann der Anschlussbolzen vorteilhaft zusammen mit dem durch das Blech gebildeten Teil des elektrischen Anschlusses gemeinsam in einer entsprechenden Mold-Form gehalten werden und von Mold-Material unter Ausbildung des Gehäusedeckels umspritzt werden.

In einer bevorzugten Ausführungsform ist die aus dem Gehäusedeckel herausragende Haltevorrichtung durch ein Blech gebildet. Bevorzugt weist die Haltevorrichtung eine Befestigungslasche auf, welche ausgebildet ist, mit dem Gehäuse verschraubt zu werden. Beispielsweise weist die in den Gehäusedeckel eingebettete Haltevorrichtung zusätzlich zu der aus dem Gehäusedeckel herausragenden Befestigungslasche eine in den Gehäusedeckel eingebettete radial abweisende Haltefahne auf, welche ausgebildet ist, ein auf den Gehäusedeckel wirkendes Drehmoment abzufangen.

In einer bevorzugten Ausführungsform sind der Anschlussbolzen und/oder der in dem Gehäuse eingemoldete Teil des Anschlusses aus Kupfer oder einer kupferhaltigen Legierung gebildet. So kann der elektrische Anschluss vorteilhaft einen geringen Innenwiderstand aufweisen und beim Durchflossenwerden von elektrischem Strom eine geringe Verlustleistung erzeugen.

In einer bevorzugten Ausführungsform erstreckt sich der Anschlussbolzen, welcher mit dem Gehäusedeckel verbunden ist, sich parallel zu einer Rotorwelle des Rotors der elektrischen Maschine nach außen. Das Gehäuse der elektrischen Maschine ist beispielsweise hohlzylindrisch ausgebildet.

Das Kunststoffmaterial des Gehäusedeckels ist beispielsweise ein Kunstharz, insbesondere Epoxidharz oder Phenolharz, oder ein Thermoplast, insbesondere Polyester, PBT oder PET (PBT= Polybutylenterephtalat, PET = Poly-Ethylen-Terephtalat), PPA (PPA = Poly-Phtal-Amid) oder ABS (ABS = AcrylnitrilButadien-Styrol).

Das Gehäusematerial ist beispielsweise ein Metallgehäuse, insbesondere Aluminiumgehäuse, oder ein Kunststoffgehäuse aus wenigstens einem der vorgenannten Kunststoffe.

Die Erfindung betrifft auch ein Set umfassend ein Gerät, insbesondere eine elektrische Maschine mit einem Gehäuse und wenigstens zwei Gehäusedeckeln, wobei die Gehäusedeckel jeweils ausgebildet sind, dieselbe Gehäuseöffnung des Gehäuses zu verschließen, wobei die elektrischen Anschlüsse der zueinander verschiedenen Gehäusedeckel - bevorzugt in einer flachen Erstreckung des Gehäusedeckels - an zueinander verschiedenen Orten angeordnet und mit dem Gehäusedeckel verbunden sind. So braucht vorteilhaft nur der Gehäusedeckel für verschiedene Anschlusspositionen geändert werden, wobei das Gehäuse beibehalten werden kann.

Die Erfindung wird nun im Folgenden anhand von Figuren und weiteren Ausführungsbeispielen beschrieben.
Figur 1 zeigt ein Ausführungsbeispiel für eine elektrische Maschine, bei der ein elektrischer Anschluss in einen Gehäusedeckel integriert ist;
Figur 2 zeigt eine Aufsicht auf den in Figur 1 beschriebenen Kontakt;
Figur 3 zeigt eine Aufsicht auf die in Figur 2 beschriebene Haltevorrichtung;
Figur 4 zeigt eine Aufsicht auf den in Figur 1 beschriebenen Gehäusedeckel.

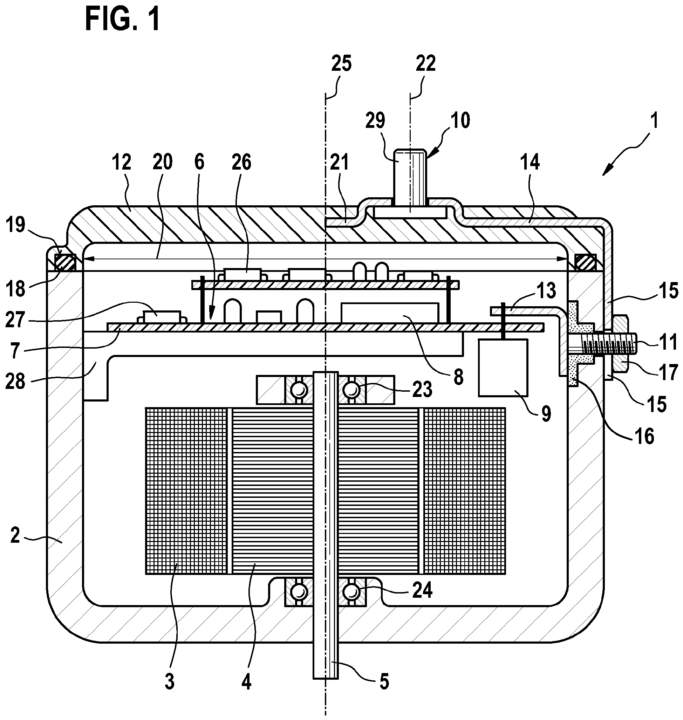

Figur 1 zeigt - schematisch - ein Ausführungsbeispiel für ein elektrisches Gerät, in diesem Ausführungsbeispiel eine elektrische Maschine 1. Die elektrische Maschine 1 weist ein Gehäuse 2 auf, welches in diesem Ausführungsbeispiel becherförmig ausgebildet ist. Das Gehäuse 2 ist in diesem Ausführungsbeispiel aus Metall, insbesondere Aluminium, gebildet. Das in diesem Ausführungsbeispiel insbesondere becherförmige Gehäuse 2 umschließt in diesem Ausführungsbeispiel einen Hohlraum, in dem ein Stator 3, in diesem Ausführungsbeispiel gebildet durch Statorspulen, und einen Rotor 4, insbesondere ein permanentmagnetisch ausgebildeter Rotor oder ein zum Bestromen ausgebildeter Rotor, angeordnet sind. Der Rotor 4 weist eine Rotorwelle 5 auf, welche mittels Rotorlagern 23 und 24 gelagert ist und ausgebildet ist, sich um eine Rotorlängsachse 25 zu drehen.

Die elektrische Maschine 1 weist auch eine Steuereinheit 6 auf, welche in diesem Ausführungsbeispiel eine Leiterplatte 7 aufweist.

Mit der Leiterplatte 7 ist ein Mikrocontroller 27 verbunden und eine Leistungsendstufe 8, zuvor Inverter genannt, wobei die Leistungsendstufe 8 in diesem Ausführungsbeispiel eine B6-Brücke bildende Halbleiterschalter, insbesondere Feldeffekttransistoren, aufweist. Die Steuereinheit 6 ist ausgebildet, die Leistungsendstufe 8 zum Erzeugen eines magnetischen Drehfeldes anzusteuern, wobei die Leistungsendstufe 8 ausgebildet ist, von einem Pulsweitenmodulator, beispielsweise gebildet durch den Mikrocontroller 27, erzeugte Steuersignale zu empfangen und in Abhängigkeit der empfangenen Steuersignale den Stator 3 zum Erzeugen des magnetischen Drehfeldes zu bestromen. Die Leistungsendstufe 8 ist dazu mit dem Stator 3 ausgangsseitig verbunden. Im Falle der zuvor beschriebenen Ausführungsform des bestromten Rotors 4 kann die Leistungsendstufe 8 ausgangsseitig mit dem Rotor 4 verbunden sein.

Die Leiterplatte 7 der Steuereinheit 6 ist in diesem Ausführungsbeispiel mit einem Kühlkörper 28 verbunden, welcher mit dem Gehäuse 2 wärmeleitend verbunden ist. So kann von der Leistungsendstufe 8 erzeugte Verlustwärme über den Kühlkörper 8 an das Gehäuse 2 abgeführt werden.

Die elektrische Maschine 1 weist auch einen Zwischenkreiskondensator 9 auf, welcher mit einer Stromversorgung der Leistungsendstufe 8 verbunden ist.

Die elektrische Maschine 1 weist auch einen elektrischen Anschluss 10 auf, mit dem die elektrische Maschine 1 nach außen hin - beispielsweise mit einem stromführenden Bordnetz eines Elektrofahrzeugs - verbunden werden kann. Der elektrische Anschluss 10 bildet in diesem Ausführungsbeispiel einen B-Plus-Anschluss eines Kraftfahrzeugbordnetzes.

Der Anschluss 10 ist mit einem Gegenanschluss 11 elektrisch verbunden. Der Gegenanschluss 11 ist mit dem Gehäuse 2 mechanisch verbunden und ist beispielsweise durch einen Schraubbolzen gebildet. Der Gegenanschluss 11 ist durch einen Durchbruch des Gehäuses 2 und dort durch eine Isolierhülse 16 ins Innere des Gehäuses 2 geführt und weist einen insbesondere abgewinkelten Kontakt 13 auf, welcher im Inneren des Gehäuses 2 mit dem Zwischenkreiskondensator 9 und auch mit der Leistungsendstufe 8 und weiteren stromversorgenden Leitungen zur Stromversorgung von elektrischen Komponenten der elektrischen Maschine 1, beispielsweise der Steuereinheit 6, verbunden ist. Die Isolierhülse 16, insbesondere eine Kunststoffhülse, ist ausgebildet, den Gegenanschluss 11 von dem Gehäuse 2 elektrisch zu isolieren.

Der elektrische Anschluss 10 ist in diesem Ausführungsbeispiel mit einem Gehäusedeckel 12 verbunden und ist dazu wenigstens abschnittsweise in den Gehäusedeckel 12 eingebettet. Der Gehäusedeckel 12 ist in diesem Ausführungsbeispiel als Kunststoffdeckel ausgebildet, sodass der elektrische Anschluss 10 in den Gehäusedeckel 12 eingemoldet, insbesondere mit den im Gehäusedeckel 12 eingebetteten Bereich, mit Kunststoffmaterial des Gehäusedeckels 12 umspritzt ist. Das Kunststoffmaterial ist beispielsweise PPA, PBT, PET oder ABS.

Der elektrische Anschluss 10 weist einen Anschlussbolzen 29 auf, welcher aus dem Gehäusedeckel 12 herausragt und mit einer Längsachse 22 des Anschlussbolzens 29 in diesem Ausführungsbeispiel parallel zu der Rotorlängsachse 25 der Rotorwelle 5 angeordnet ist.

Der elektrische Anschluss 10 weist auch ein Anschlussblech 14 auf, wobei das Anschlussblech 14 teilweise in den Gehäusedeckel 12 eingebettet ist. Der Anschlussbolzen 29 ist mit dem Anschlussblech 14 elektrisch verbunden. Der Anschlussbolzen 29 ist in einem Durchbruch des Anschlussblechs 14 angeordnet und ragt durch den Durchbruch hindurch und ist mit dem Anschlussblech 14 beispielsweise pressverbunden oder schweißverbunden.

Der elektrische Anschluss 10, insbesondere das Anschlussblech 14, weist auch eine radial von dem Anschlussbolzen 29, insbesondere der Längsachse 22 des Anschlussbolzens 29, radial abweisende Haltefahne 21 auf, welche in den Gehäusedeckel 12 eingebettet ist. Die Haltefahne 21 kann so ein auf den Anschlussbolzen 29 wirkendes Drehmoment oder Kippmoment, bezogen auf die Längsachse 22, in dem Gehäusedeckel 12 verteilen.

Das Anschlussblech 14 ragt mit einem abgewinkelten Kontakt 15 aus dem Gehäusedeckel 12 heraus, wobei der Kontakt 15 ausgebildet ist, mit dem Gegenanschluss 11 elektrisch verbunden, in diesem Ausführungsbeispiel schraubverbunden zu werden. Der Kontakt 15 kann dazu einen zum Durchführen des als Anschlussbolzen ausgebildeten Gegenanschlusses 11 ausgebildeten Durchbruch oder eine U-förmige Aussparung aufweisen. Der Gegenanschluss 11 umfasst in diesem Ausführungsbeispiel auch eine Schraubmutter 17, mit der der Kontakt 15 mit dem Gegenanschluss 11 schraubverbunden werden kann.

Die elektrische Maschine 1, insbesondere der Zwischenkreiskondensator 9, die Leistungsendstufe 8 und die Steuereinheit 6, können so über den elektrischen Anschluss 10, welcher über den Gegenanschluss 11 nach außen in den Gehäusedeckel 12 geführt ist, elektrisch versorgt werden.

Der Gehäusedeckel 12 weist im Bereich eines Gehäusedeckelrandes eine umlaufende Nut 19 auf, in welcher eine Dichtung 18 angeordnet ist. Der Gehäusedeckel 12 kann so das Gehäuse 2, insbesondere eine Gehäuseöffnung 20 des Gehäuses 2, dicht verschließen und so vor eindringender Verschmutzung und/oder Feuchtigkeit schützen. Vorteilhafte Varianten der elektrischen Maschine 1 können dadurch gebildet sein, dass der elektrische Anschluss 10, welcher in diesem Ausführungsbeispiel radial beabstandet von der Rotorlängsachse 25 angeordnet ist, an einer anderen Position, bezogen auf die Rotorlängsachse 25, in den Gehäusedeckel 12 eingebettet ist. So können zueinander verschiedene Varianten der elektrischen Maschine 1 mit zueinander verschiedenen Gehäusedeckeln 12 mit zueinander verschiedenen Positionen des elektrischen Anschlusses 10 mit demselben Gehäusebecher 2, und derselben Anordnung von elektrischen Bauteilen, beispielsweise der Steuereinheit 6 und des Zwischenkreiskondensators 9, in dem Gehäuse 2, gebildet sein.

Die Steuereinheit 6 umfasst in diesem Ausführungsbeispiel auch eine parallel zur Leiterplatte 7 angeordnete weitere Leiterplatte, welche in diesem Ausführungsbeispiel integrierte Bausteine, beispielsweise Logik-Schaltkreise aufweist, von denen in diesem Ausführungsbeispiel der Logik-Schaltkreis 26 beispielhaft bezeichnet ist Der Logik-Schaltkreis 26 bildet beispielsweise einen Mikroprozessor. Die Steuereinheit 6 weist auch einen integrierten Schaltkreis 27 auf, welcher in diesem Ausführungsbeispiel mit der Leiterplatte 7 verbunden ist. Mit dem so nach außen geführten Gegenanschluss 11 und den mit dem Gegenanschluss 11 verbundenen elektrischen Anschluss 10, welcher mit dem Gehäusedeckel 12 verbunden ist, kann das Gehäuse 2 vorteilhaft dicht verschlossen werden, wobei vorteilhaft für zueinander verschiedene Positionierungen des elektrischen Anschlusses 10 nur zueinander verschiedene Gehäusedeckel wie der Gehäusedeckel 12 gefertigt werden müssen. Die Anordnung der elektrischen Komponenten der elektrischen Maschine 1, wie der Steuereinheit 6, des Stators 3, des Zwischenkreiskondensators 9 und der Leistungsendstufe 8, welche so vorteilhaft mit hoher Packungsdichte und hoch integriert in dem Gehäuse 2 aufgenommen sein können, braucht so bei verschiedenen Positionsanordnungen des elektrischen Anschlusses 10 nicht geändert zu werden.

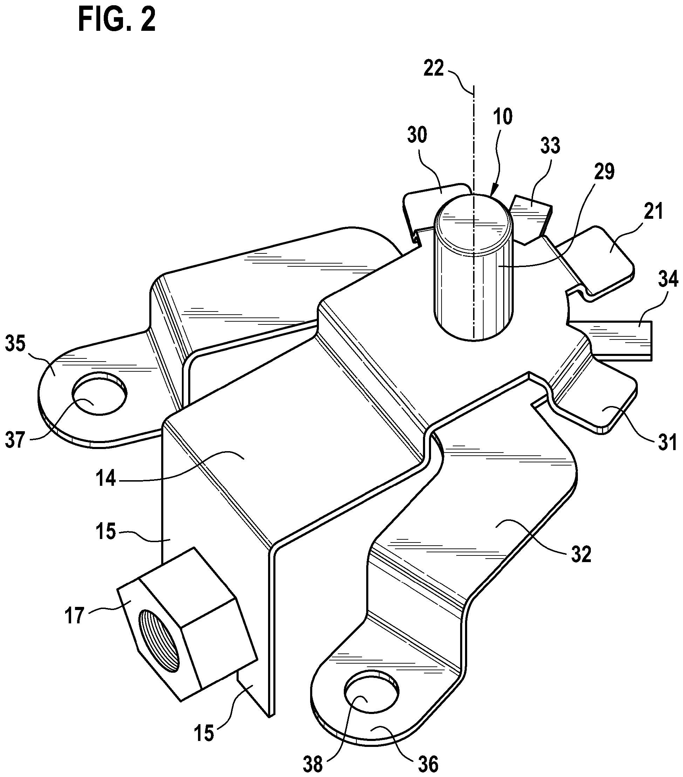

Figur 2 zeigt den in Figur 1 bereits gezeigten elektrischen Anschluss 10 in einer detaillierten Aufsicht.

Dargestellt ist der Anschlussbolzen 29, welcher sich quer zu einer flachen Erstreckung des Anschlussbleches 14 erstreckt. Dargestellt ist auch der abgewinkelte Kontakt 15, welcher an das Anschlussblech 14 angeformt ist, wie so die an das Anschlussblech 14 angeformten Haltefahnen, umfassend die bereits in der Schnittdarstellung in Figur 1 dargestellte Haltefahne 21, wie auch weitere mit dem Anschlussblech 14 verbundene und an das Anschluss 14 angeformte, radial abweisende Haltefahnen 30 und 31.

Der elektrische Anschluss 10 weist in diesem Ausführungsbeispiel auch eine Haltevorrichtung 32 auf. Die Haltevorrichtung 32 ist zur mechanischen Verstärkung des elektrischen Anschlusses 10 ausgebildet. Die Haltevorrichtung 2 ist in diesem Ausführungsbeispiel durch ein Blech gebildet, welches mit einem Teil in dem Gehäusedeckel 12 eingebettet ist, wobei sich der eingebettete Teil der Haltevorrichtung 32 wenigstens teilweise parallel zu dem Anschlussblech 14 erstreckt. Die Haltevorrichtung 32 ist in diesem Ausführungsbeispiel so von dem Anschlussbolzen 29 und dem Anschlussblech 14 elektrisch isoliert.

Die Haltevorrichtung 32 weist in diesem Ausführungsbeispiel auch von der Längsachse 22 des Anschlussbolzens 29 radial abweisende und in den Gehäusedeckel 12 eingebettete Haltefahnen 33 und 34 auf. Die Haltevorrichtung 32 weist auch aus dem Gehäusedeckel 12 herausragende Befestigungslaschen 35 und 36 auf, wobei die Befestigungslasche 36 einen Durchbruch 38 und die Befestigungslasche 35 einen Durchbruch 37 aufweist. Die Befestigungslaschen 35 und 36 können über die Durchbrüche 37 beziehungsweise 38 mit dem in Figur 1 dargestellten Gehäuse 2 schraubverbunden werden und so den Gehäusedeckel 12 im Bereich des Anschlussbolzens 29, also im Bereich des elektrischen Anschlusses 10, vor übermäßiger Beanspruchung durch ein auf den Gehäusedeckel 12 im Bereich des elektrischen Anschlusses 10 einwirkendes Moment schützen. Dazu ist die Haltevorrichtung 32 ausgebildet, eine von dem Anschlussbolzen 29 auf den Gehäusedeckel 12 einwirkende Kraft, insbesondere einen Moment, auf die Laschen 35 und 36 abzuleiten.

Dargestellt ist auch eine Schraubmutter 17, mit der der Kontakt 15 mit dem in Figur 1 dargestellten Gegenanschluss 11 schraubverbunden werden kann.

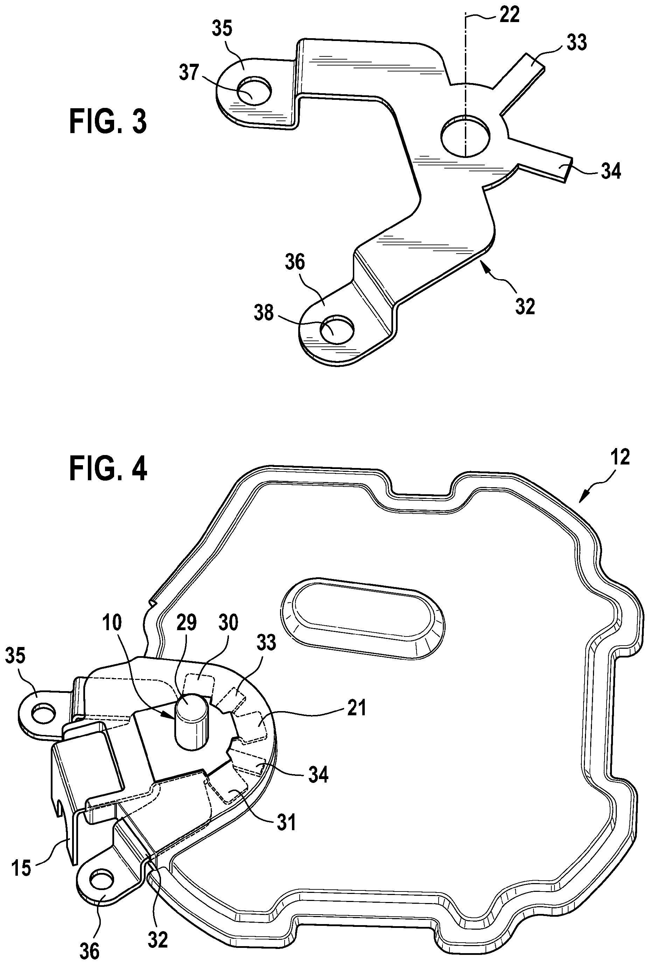

Figur 3 zeigt die in Figur 2 bereits dargestellte Haltevorrichtung 32 im Detail. Sichtbar sind die Laschen 35, 36, die Durchbrüche 37 und 38 und ein weiterer Durchbruch, durch den in der Anordnung zusammen mit dem elektrischen Anschluss 10, wie in Figur 2 gezeigt, die Längsachse 22 verläuft, von dem die Haltefahnen 33 und 34 radial abweisen.

Figur 4 zeigt den in Figur 1 bereits dargestellten Gehäusedeckel 12 in einer Aufsicht. Der Gehäusedeckel 12 ist in Figur 1 in der Schnittdarstellung der elektrischen Maschine 1 dargestellt. Sichtbar sind die - gestrichelt dargestellten - Haltefahnen 30, 31, 21 des elektrischen Anschlusses 10, welche in den Gehäusedeckel 12 eingebettet sind. Die Haltefahnen 33 und 34 der Haltevorrichtung 32 sind in den Gehäusedeckel 12 eingebettet, wobei die Laschen 35 und 36 aus dem Gehäusedeckel herausragen.

Der Kontakt 15, welcher an das Anschlussblech 14 des elektrischen Kontaktes 10 angeformt ist, erstreckt sich abgewinkelt zum Anschlussblech 14, in diesem Ausführungsbeispiel in einem rechten Winkel zum Anschlussblech 14. So kann das Anschlussblech 14 gemeinsam mit dem Kontakt 15 eine elektrische Verbindungsleitung von dem Gegenanschluss 11 zu dem Anschlussbolzen 29 hin bilden.

## Patentansprüche

1. Elektrisches Gerät (1), wobei das Gerät (1) ein Gehäuse (2) aufweist, und einen mit dem Gehäuse (2) insbesondere trennbar verbundenen Gehäusedeckel (12), welcher ausgebildet ist, eine Gehäuseöffnung (20) des Gehäuses (2) zu verschließen, wobei wenigstens eine elektrische Komponente (6, 8, 3) des elektrischen Geräts (1) in dem Gehäuse (2) aufgenommen ist,
der Gehäusedeckel (12) einen nach außen weisenden elektrischen Anschluss (10) zur Stromversorgung und/oder Stromabgabe des Geräts (1) aufweist, welcher mit dem Gehäusedeckel (12) verbunden ist, und welcher ausgebildet ist, mit einem mit dem Gehäuse (2) verbundenen Gegenanschluss (11) verbunden zu werden,
wobei der Gehäusedeckel (12) ein Kunststoffdeckel ist und der elektrische Anschluss (10) mit wenigstens einem Teil in den Gehäusedeckel (12) eingebettet ist, wobei ein zum Verbinden mit dem Gegenanschluss (11) ausgebildeter Teil des Anschlusses (10) einen aus dem Gehäusedeckel (12) herausragenden Kontakt (29) bildet wobei
der elektrische Anschluss (10) als Kontakt (29) einen nach außen weisenden Anschlussbolzen (29) aufweist,
**dadurch gekennzeichnet,dass**
der in dem Gehäusedeckel (12) eingebettete Teil des elektrischen Anschlusses wenigstens eine Haltefahne (21, 30, 31) aufweist, welche sich in einer flachen Erstreckung des Gehäusedeckels radial abweisend erstreckt.

2. Elektrisches Gerät (1) nach Anspruch 1,
**dadurch gekennzeichnet, dass**
der elektrische Anschluss (10) ausgebildet ist, mit dem Gegenanschluss (11) schraubverbunden oder steckverbunden zu werden.

3. Elektrisches Gerät (1) nach Anspruch 1 oder 2,
**dadurch gekennzeichnet, dass**
der elektrische Anschluss (10) ausgebildet ist, mit dem Gegenkontakt trennbar verbunden zu werden.

4. Elektrisches Gerät (1) nach einem der vorhergehenden Ansprüche,
**dadurch gekennzeichnet, dass**
der elektrische Anschluss 10 ein Anschlussblech (14) aufweist, wobei das Anschlussblech (14) teilweise in den Gehäusedeckel (12) eingebettet ist und der herausragende Kontakt (29) durch einen Anschlussbolzen gebildet ist, der mit dem Anschlussblech (14) elektrisch verbunden ist, wobei das Anschlussblech (14) mit einem abgewinkelten Kontakt (15) aus dem Gehäusedeckel 12 herausragt, wobei der Kontakt (15) ausgebildet ist, mit dem Gegenanschluss (11) elektrisch verbunden zu werden.

5. Elektrisches Gerät (1) nach Anspruch 4,
**dadurch gekennzeichnet, dass**
der Kontakt (15) ausgebildet ist, mit dem Gegenanschluss (11) schraubverbunden zu werden, wobei der Kontakt (15) dazu einen zum Durchführen des als Anschlussbolzen ausgebildeten Gegenanschlusses (11) ausgebildeten Durchbruch oder eine U-förmige Aussparung aufweist.

6. Elektrisches Gerät (1) nach einem der vorhergehenden Ansprüche,
**dadurch gekennzeichnet, dass**
der elektrische Anschluss eine Haltevorrichtung (32) aufweist, welche mit einem Abschnitt (35, 36) aus dem Gehäusedeckel (12) herausragt und welche ausgebildet ist, mit dem Gehäuse (2) schraubverbunden oder steckverbunden zu werden.

7. Elektrisches Gerät (1) nach einem der vorhergehenden Ansprüche,
**dadurch gekennzeichnet, dass**
der eingebettete Teil des elektrischen Anschlusses (10) mit der Haltefahne (21, 30, 31) aus einem Blech gebildet ist, und der Anschlussbolzen (29) mit dem Blech verbunden ist.

8. Elektrisches Gerät (1) nach Anspruch 6 oder 7,
**dadurch gekennzeichnet, dass**
die aus dem Gehäusedeckel (12) herausragende Haltevorrichtung (32) mit einem Abschnitt im Bereich des Anschlussbolzens (29) in den Gehäusedeckel (12) eingebettet ist und ausgebildet ist, ein von dem Anschlussbolzen (29) auf den Gehäusedeckel (12) einwirkendes Moment aufzunehmen und abzuleiten.

9. Elektrisches Gerät (1) nach einem der vorhergehenden Ansprüche,
**dadurch gekennzeichnet, dass**
der Anschlussbolzen (29) und/oder der in dem Gehäuse (2) eingebettete Teil des Anschlusses (10) aus Kupfer gebildet sind.

10. Elektrisches Gerät (1) nach einem der vorhergehenden Ansprüche,
**dadurch gekennzeichnet, dass**
das Gerät eine elektrische Maschine ist, wobei die elektrische Maschine einen Stator (3) und einen Rotor (4) aufweist, und ist ausgebildet, als Generator und/oder Elektromotor betrieben zu werden, wobei der Anschlussbolzen (29) sich parallel zu einer Rotorwelle (5) des Rotors (4) der elektrischen Maschine (1) nach außen erstreckt.

11. Set umfassend ein Elektrisches Gerät (1) wobei das Gerät (1) ein Gehäuse (2) aufweist, und einen mit dem Gehäuse (2) insbesondere trennbar verbundenen Gehäusedeckel (12), welcher ausgebildet ist, eine Gehäuseöffnung (20) des Gehäuses (2) zu verschließen, wobei wenigstens eine elektrische Komponente (6, 8, 3) des elektrischen Geräts (1) in dem Gehäuse (2) aufgenommen ist, wobei der Gehäusedeckel (12) einen nach außen weisenden elektrischen Anschluss (10) zur Stromversorgung und/oder Stromabgabe des Geräts (1) aufweist, welcher mit dem Gehäusedeckel (12) verbunden ist, und welcher ausgebildet ist, mit einem mit dem Gehäuse (2) verbundenen Gegenanschluss (11) verbunden zu werden,
**dadurch gekennzeichnet, dass**
das Set wenigstens zwei zueinander verschiedene Gehäusedeckel (12) aufweist, wobei die Gehäusedeckel (12) jeweils ausgebildet sind, dieselbe Gehäuseöffnung (20) des Gehäuses (2) zu verschließen, wobei die elektrischen Anschlüsse (10) der zueinander verschiedenen Gehäusedeckel (12) an zueinander verschiedenen Orten angeordnet und mit dem Gehäusedeckel (12) verbunden sind, und wobei wenigstens einer der Gehäusedeckel (12) ein Gehäusedeckel nach einem der vorhergehenden Ansprüche ist.

## Claims

1. Electrical device (1), wherein the device (1) has a housing (2) and a housing cover (12) which is connected, in particular in a detachable manner, to the housing (2) and is designed to close a housing opening (20) of the housing (2), wherein at least one electrical component (6, 8, 3) of the electrical device (1) is accommodated in the housing (2),
the housing cover (12) has an outwardly pointing electrical connection (10) for power supply to and/or power output from the device (1), which electrical connection is connected to the housing cover (12) and is designed to be connected to a mating connection (11) which is connected to the housing (2),
wherein
the housing cover (12) is a plastic cover, and the electrical connection (10) is embedded in the housing cover (12) by way of at least one part, wherein a part of the connection (10), which part is designed for connection to the mating connection (11), forms a contact (29) which projects out of the housing cover (12), wherein
the electrical connection (10) has, as contact (29), an outwardly pointing connection pin (29),
**characterized in that**
that part of the electrical connection which is embedded in the housing cover (12) has at least one retaining lug (21, 30, 31) which extends such that it points radially away in a flat extent of the housing cover.

2. Electrical device (1) according to Claim 1,
**characterized in that**
the electrical connection (10) is designed to be screw-connected or plug-connected to the mating connection (11).

3. Electrical device (1) according to Claim 1 or 2,
**characterized in that**
the electrical connection (10) is designed to be connected in a detachable manner to the mating contact.

4. Electrical device (1) according to one of the preceding claims,
**characterized in that**
the electrical connection (10) has a metal connection plate (14), wherein the metal connection plate (14) is partially embedded in the housing cover (12) and the projecting contact (29) is formed by a connection pin which is electrically connected to the metal connection plate (14), wherein the metal connection plate (14), by way of an angled contact (15), projects out of the housing cover (12), wherein the contact (15) is designed to be electrically connected to the mating connection (11).

5. Electrical device (1) according to Claim 4,
**characterized in that**
the contact (15) is designed to be screw-connected to the mating connection (11), wherein for this purpose the contact (15) has an aperture, which is designed for the mating connection (11), which is designed as a connection pin, to be passed through, or a U-shaped cutout.

6. Electrical device (1) according to one of the preceding claims,
**characterized in that**
the electrical connection has a holding apparatus (32) which, by way of a section (35, 36), projects out of the housing cover (12) and is designed to be screw-connected or plug-connected to the housing (2).

7. Electrical device (1) according to one of the preceding claims,
**characterized in that**
the embedded part of the electrical connection (10) with the retaining lug (21, 30, 31) is formed from a metal plate, and the connection pin (29) is connected to the metal plate.

8. Electrical device (1) according to Claim 6 or 7,
**characterized in that**
the holding apparatus (32), which projects out of the housing cover (12), is, by way of a section in the region of the connection pin (29), embedded in the housing cover (12) and is designed to absorb and to divert a torque which acts on the housing cover (12) from the connection pin (29).

9. Electrical device (1) according to one of the preceding claims,
**characterized in that**
the connection pin (29) and/or that part of the connection (10) which is embedded in the housing (2) are/is formed from copper.

10. Electrical device (1) according to one of the preceding claims,
**characterized in that**
the device is an electrical machine, wherein the electrical machine has a stator (3) and a rotor (4) and is designed to be operated as a generator and/or electric motor, wherein the connection pin (29) extends outwards parallel in relation to a rotor shaft (5) of the rotor (4) of the electrical machine (1).

11. Set comprising an electrical device (1), wherein the device (1) has a housing (2), and a housing cover (12) which is connected, in particular in a detachable manner, to the housing (2) and is designed to close a housing opening (20) of the housing (2), wherein at least one electrical component (6, 8, 3) of the electrical device (1) is accommodated in the housing (2), wherein the housing cover (12) has an outwardly pointing electrical connection (10) for power supply to and/or power output from the device (1), which electrical connection is connected to the housing cover (12) and is designed to be connected to a mating connection (11) which is connected to the housing (2),
**characterized in that**
the set has at least two housing covers (12) which are different from one another, wherein the housing covers (12) are each designed to close the same housing opening (20) of the housing (2), wherein the electrical connections (10) of the housing covers (12) which are different from one another are arranged at locations which are different from one another and are connected to the housing cover (12), and wherein at least one of the housing covers (12) is a housing cover according to one of the preceding claims.

## Revendications

1. Appareil électrique (1), dans lequel l'appareil (1) présente un boîtier (2), et un couvercle de boîtier (12) assemblé, en particulier de façon séparable, au boîtier (2), qui est configuré de façon à fermer une ouverture de boîtier (20) du boîtier (2), dans lequel au moins un composant électrique (6, 8, 3) de l'appareil électrique (1) est logé dans le boîtier (2),
le couvercle de boîtier (12) présente un raccord électrique (10) orienté vers l'extérieur pour l'arrivée de courant et/ou le départ de courant de l'appareil (1), qui est assemblé au couvercle de boîtier (12), et qui est configuré de façon à être connecté à un raccord opposé (11) assemblé au boîtier (2),
dans lequel le couvercle de boîtier (12) est un couvercle en matière plastique et le raccord électrique (10) est noyé par au moins une partie dans le couvercle de boîtier (12), dans lequel une partie du raccord (10) formée en vue de la connexion avec le raccord opposé (11) forme un contact (29) sortant hors du couvercle de boîtier (12), dans lequel le raccord électrique (10) présente comme contact (29) une broche de raccordement (29) dirigée vers l'extérieur,
**caractérisé en ce que** la partie du raccord électrique noyée dans le couvercle de boîtier (12) présente au moins une ailette de maintien (21, 30, 31), qui s'étend radialement vers l'extérieur en une extension plate du couvercle de boîtier.

2. Appareil électrique (1) selon la revendication 1, **caractérisé en ce que** le raccord électrique (10) est configuré de façon à être connecté au raccord opposé (11) par une vis ou par une broche.

3. Appareil électrique (1) selon la revendication 1 ou 2, **caractérisé en ce que** le raccord électrique (10) est configuré de façon à être connecté de façon séparable au contact opposé.

4. Appareil électrique (1) selon l'une quelconque des revendications précédentes, **caractérisé en ce que** le raccord électrique (10) présente une tôle de raccord (14), dans lequel la tôle de raccord (14) est noyée en partie dans le couvercle de boîtier (12) et le contact sortant (29) est formé par une broche de contact, qui est reliée électriquement à la tôle de raccord (14), dans lequel la tôle de raccord (14) sort par un contact coudé (15) hors du couvercle de boîtier (12), dans lequel le contact (15) est configuré de façon à être connecté électriquement au raccord opposé (11).

5. Appareil électrique (1) selon la revendication 4, **caractérisé en ce que** le contact (15) est configuré de façon à être connecté au raccord opposé (11) par une vis, dans lequel le contact (15) présente à cet effet une traversée formée pour le passage du raccord opposé (11) formé par une broche de raccordement ou une découpe en forme de U.

6. Appareil électrique (1) selon l'une quelconque des revendications précédentes, **caractérisé en ce que** le raccord électrique présente un dispositif de retenue (32), qui sort avec une partie (35, 36) hors du couvercle de boîtier (12) et qui est configuré de façon à être assemblé au boîtier (2) par une vis ou par une broche.

7. Appareil électrique (1) selon l'une quelconque des revendications précédentes, **caractérisé en ce que** la partie noyée du raccord électrique (10) avec l'ailette de maintien (21, 30, 31) est formée à partir d'une tôle, et la broche de raccordement (29) est assemblée à la tôle.

8. Appareil électrique (1) selon la revendication 6 ou 7, **caractérisé en ce que** le dispositif de retenue (32) sortant hors du couvercle de boîtier (12) est noyé dans le couvercle de boîtier (12) avec une partie située dans la région de la broche de raccordement (29) et est configuré de façon à recevoir et à dévier un couple agissant sur le couvercle de boîtier (12) et est configuré de façon à reprendre et à dévier un couple agissant de la broche de raccordement (29) sur le couvercle de boîtier (12).

9. Appareil électrique (1) selon l'une quelconque des revendications précédentes, **caractérisé en ce que** la broche de raccordement (29) et/ou la partie du raccord (10) noyée dans le boîtier (2) sont fabriquées en cuivre.

10. Appareil électrique (1) selon l'une quelconque des revendications précédentes, **caractérisé en ce que** l'appareil est une machine électrique, dans lequel la machine électrique présente un stator (3) et un rotor (4), et est configurée pour fonctionner en générateur et/ou en moteur électrique, dans lequel la broche de raccordement (29) s'étend vers l'extérieur parallèlement à un arbre de rotor (5) du rotor (4) de la machine électrique (1).

11. Ensemble comprenant un appareil électrique (1), dans lequel l'appareil (1) présente un boîtier (2), et un couvercle de boîtier (12) assemblé, en particulier de façon séparable, au boîtier (2), qui est configuré de façon à fermer une ouverture de boîtier (20) du boîtier (2), dans lequel au moins un composant électrique (6, 8, 3) de l'appareil électrique (1) est logé dans le boîtier (2), dans lequel le couvercle de boîtier (12) présente un raccord électrique (10) orienté vers l'extérieur pour l'arrivée de courant et/ou le départ de courant de l'appareil (1), qui est assemblé au couvercle de boîtier (12), et qui est configuré de façon à être connecté à un raccord opposé (11) assemblé au boîtier (2),
**caractérisé en ce que** l'ensemble présente au moins deux couvercles de boîtier différents l'un de l'autre (12), dans lequel les couvercles de boîtier (12) sont respectivement configurés de façon à fermer la même ouverture de boîtier (20) du boîtier (2), dans lequel les raccords électriques (10) des couvercles de boîtier (12) différents l'un de l'autre sont disposés à des endroits différents l'un de l'autre et sont assemblés au couvercle de boîtier (12), et dans lequel au moins un des couvercles de boîtier (12) est un couvercle de boîtier selon l'une quelconque des revendications précédentes.
